# EUROPÄISCHE PATENTSCHRIFT

(11) **EP 1 004 509 B1**
(45) Veröffentlichungstag und Bekanntmachung des Hinweises auf die Patenterteilung: **19.02.2003**
(21) Anmeldenummer: 99119583.5
(22) Anmeldetag: 02.10.1999
(51) Int. Cl.: B65B 19/02, H05K 7/18

(54) **Packmaschinenaggregate mit integrierten Schaltschrankeinheiten**
Packing machine components with integrated switchgear cabinet
Agrégats de machine d'emballage avec armoire de commande intégrée

(30) Priorität: 15.10.1998 DE 19847467
(43) Veröffentlichungstag der Anmeldung: 31.05.2000
(73) Patentinhaber: TOPACK Verpackungstechnik GmbH, 21493 Schwarzenbek (DE)
(72) Erfinder: Georgitsis, Nikolaos, 21033 Hamburg (DE)
(74) Vertreter: Herrmann, Günther

(56) Entgegenhaltungen:
- EP-A- 0 844 178

## Beschreibung

Die Erfindung betrifft Packmaschinenaggregate mit integrierten, die Aggregate bzw. deren Komponenten elektrisch versorgende, überwachende und steuernde Organe aufnehmenden Schaltschrankeinheiten, insbesondere zur Herstellung von Verpakkungen für stabförmige Artikel der tabakverarbeitenden Industrie, wie z.B. aus der EP-A-0844178 bekannt ist.

Durch die integrative Unterbringung derartiger Schaltschrankeinheiten wird ein kompakter, raumsparender Aufbau aller zusammenwirkenden Maschinen- und Steuerungskomponenten erzielt.

Der Erfindung liegt die Aufgabe zugrunde, eine separate, leichte und schnelle Zugänglichkeit aller Komponenten, insbesondere der Antriebseinheiten der Maschinenaggregate zu ermöglichen.

Diese Aufgabe wird erfindungsgemäß gelöst durch eine gemeinsame einheitliche, die Innenräume der Maschinenaggregate und deren Schaltschrankeinheiten voneinander trennende, entfernbare Begrenzungswand.
Eine derartige Begrenzungswand ist einerseits als Installationswand des Schaltschrankes und andererseits als Maschinenabschlußwand in optimaler Weise doppelfunktional gemäß einer Weiterbildung dadurch nutzbar, daß die Begrenzungswand als Rückwand der Schaltschrankeinheit ausgebildet ist, wobei eine derartige Doppelfunktion nach einem weiteren Vorschlag am besten dadurch zur Geltung kommt, daß die Schaltschrankeinheit relativ zum Maschinenaggregat versetzbar ist.

Gemäß alternativen Weiterbildungen kann eine derartig versetzbare Schaltschrankeinheit entweder relativ zum Maschinenaggregat verschiebbar oder verschwenkbar am Maschinenaggregat angeordnet sein.

Der mit der Erfindung erzielte Vorteil besteht darin, daß mit geringerem Materialund Montageaufwand nach außen optisch und akustisch abgeschirmte Maschinenaggregate erhalten werden, deren leichte und schnelle Zugänglichkeit bei Bedarf bzw. im Wartungsfall mit wenigen Handgriffen möglich ist.

Zwei Ausführungsbeispiele der Erfindung werden nachfolgend anhand der Zeichnung erläutert.

Hierbei zeigen:
- Figur 1: eine Draufsicht auf eine aus mehreren Maschinenaggregaten bestehende Maschinenkombination mit zugeordnetem Schaltschrank,
- Figur 2: eine Rückansicht auf die Maschinenanordnung gemäß Figur 1,
- Figur 3: eine Draufsicht auf ein Maschinenaggregat mit auf alternative Weise versetzbaren Schaltschrankeinheiten und
- Figur 4: eine Rückansicht des Maschinenaggregates.

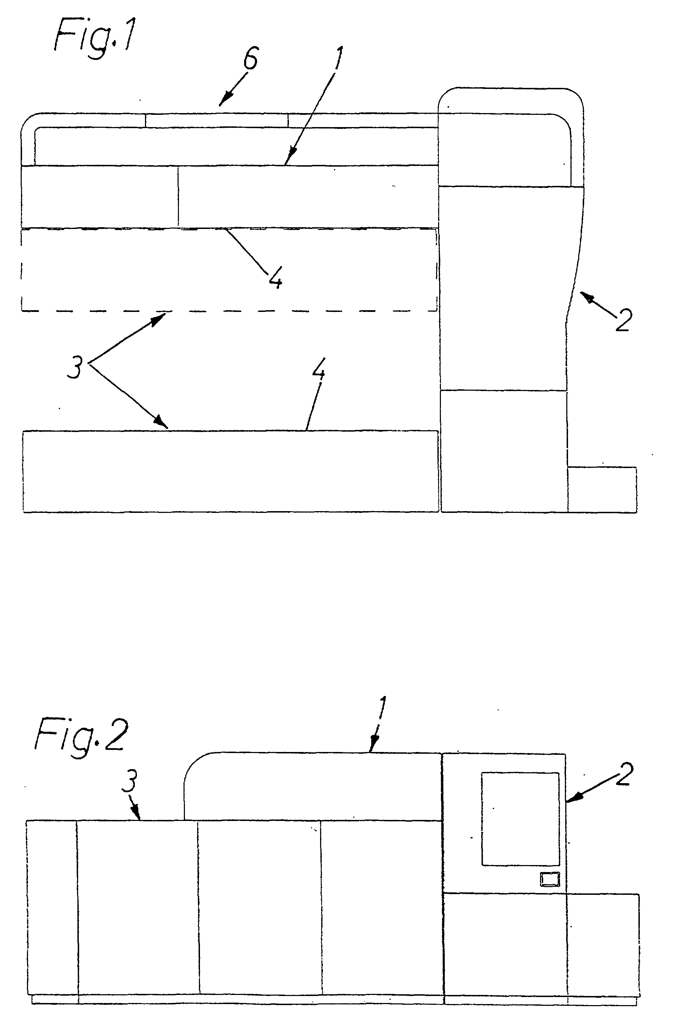

Die in den Figuren 1 und 2 dargestellte Maschinenkombination besteht aus einer Cellophaniermaschine 1 zum Umhüllen von Zigarettenpackungen mit einer Klarsichtfolie und einer quer dazu angeordneten Gebinde-Folien-Verpackungseinheit 2 zum Zusammenstellen und Umhüllen von Einzelpackungen zu stangenförmigen Packungsgebinden.
Eine zugeordnete Schaltschrankeinheit 3 bildet in der gestrichelt dargestellten Arbeitsposition mit ihrer Rückwand 4 gleichzeitig eine Begrenzungswand des benachbarten Maschinenaggregates 1. Die Schaltschrankeinheit 3 ist als Ganze relativ zum Maschinenaggregat 1 in die in Vollinien dargestellte Wartungsstellung verschiebbar, so daß ihre Rückwand 4 den Innenraum des Maschinenaggregates 1 freigibt und deren von der Bedienerseite 6 der Maschine abgewandten Antriebseinheiten der Maschinenaggregate zugänglich macht.

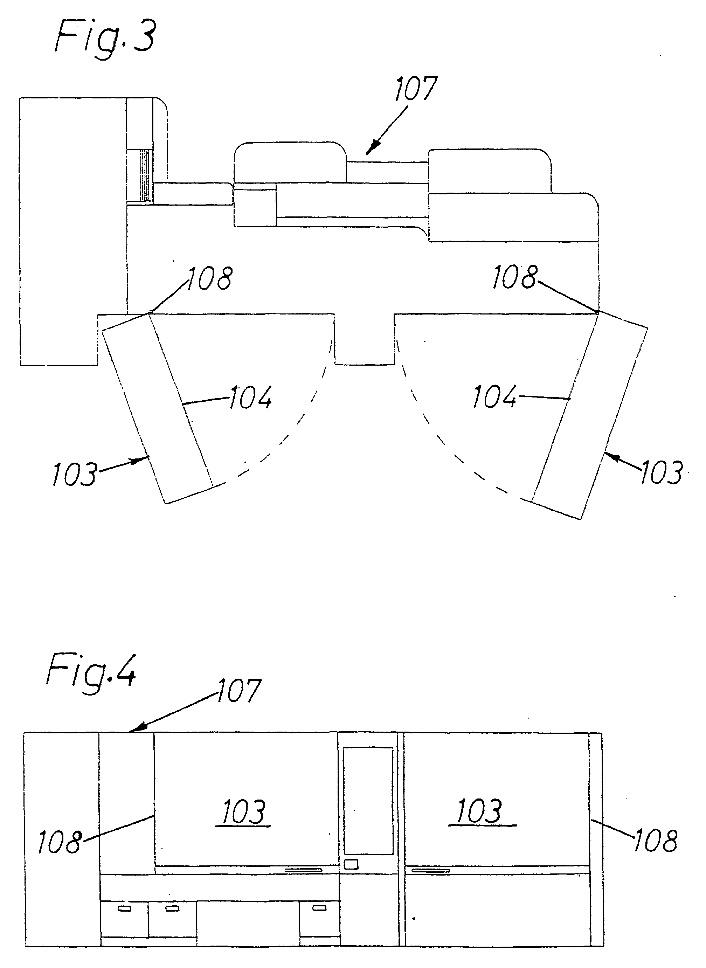

Bei der in den Figuren 3 und 4 dargestellten Variante ist ein Maschinenaggregat als sogenannte Hinged-Lid-Verpackungsmaschine 107 zum Herstellen von Hartbecherpackungen für Zigaretten vorgesehen, welcher zwei Schaltschrankeinheiten 103 zugeordnet sind, welche jeweils um eine Achse 108 verschwenkbar am Maschinenaggregat 107 angeordnet sind. Bei ihrer in Figur 3 dargestellten abgeschwenkten Stellung gibt ihre jeweilige Rückwand 104 ebenfalls den Innenraum des Maschinenaggregates zum evtl. Wartungseingriff frei.

## Patentansprüche

1. Packmaschinenaggregate mit integrierten, die Aggregate bzw. deren Komponenten elektrisch versorgende, überwachende und steuernde Organe aufnehmenden Schaltschrankeinheiten, insbesondere zur Herstellung von Verpackungen für stabförmige Artikel der tabakverarbeitenden Industrie, **gekennzeichnet durch** eine gemeinsame einheitliche, die Innenräume der Maschinenaggregate (1, 2; 107) und deren Schaltschrankeinheiten (3; 103) voneinander trennende, entfernbare Begrenzungswand (4; 104).

2. Packmaschinenaggregate nach Anspruch 1, **dadurch gekennzeichnet, daß** die Begrenzungswand (4; 104) als Rückwand der Schaltschrankeinheit (1; 107) ausgebildet ist.

3. Packmaschinenaggregate nach Anspruch 1 oder 2, **dadurch gekennzeichnet, daß** die Schaltschrankeinheit (3; 103) relativ zum Maschinenaggregat (1; 107) versetzbar ist.

4. Packmaschinenaggregate nach Anspruch 3, **dadurch gekennzeichnet, daß** die Schaltschrankeinheit (3) relativ zum Maschinenaggregat (1) verschiebbar angeordnet ist.

5. Packmaschinenaggregat nach Anspruch 3, **dadurch gekennzeichnet, daß** die Schaltschrankeinheit (103) verschwenkbar am Maschinenaggregat (107) angeordnet ist.

## Claims

1. Packing-machine units with integrated switch-cabinet units which receive members electrically supplying, monitoring and controlling the units or their components, in particular for producing packets for rod-shaped articles of the tobacco-processing industry, **characterized by** a common uniform removable boundary wall (4; 104) which separates the interior spaces of the machine units (1, 2; 107) and their switch-cabinet units (3; 103) from one another.

2. Packing-machine units according to Claim 1, **characterized in that** the boundary wall (4; 104) is constructed in the form of a rear wall of the switch-cabinet unit (1; 107).

3. Packing-machine units according to Claim 1 or 2, **characterized in that** the switch-cabinet unit (3; 103) is adjustable relative to the machine unit (1; 107).

4. Packing-machine units according to Claim 3, **characterized in that** the switch-cabinet unit (3) is arranged so as to be displaceable relative to the machine unit (1).

5. A packing-machine unit according to Claim 3, **characterized in that** the switch-cabinet unit (103) is arranged so as to be pivotable on the machine unit (107).

## Revendications

1. Groupes fonctionnels de machine d'emballage avec des unités constituant des armoires électriques intégrées, qui abritent des organes assurant l'alimentation, le contrôle et la commande électriques des groupes fonctionnels ou de leurs composants, notamment pour la fabrication d'emballages pour des articles en forme de tige de l'industrie de transformation du tabac, **caractérisés par** une paroi de délimitation (4; 104) commune unitaire, pouvant être enlevée, qui sépare les uns des autres les compartiments intérieurs des groupes fonctionnels de machine (1, 2; 107) et de leurs unités constituant des armoires électriques (3; 103).

2. Groupes fonctionnels de machine d'emballage selon la revendication 1, **caractérisés en ce que** la paroi de délimitation (4; 104) est réalisée sous forme de paroi arrière de l'unité constituant une armoire électrique (1; 107).

3. Groupes fonctionnels de machine d'emballage selon la revendication 1 ou 2, **caractérisés en ce que** l'unité constituant une armoire électrique (3; 103) peut être changée de place par rapport au groupe fonctionnel de machine (1; 107).

4. Groupes fonctionnels de machine d'emballage selon la revendication 3, **caractérisés en ce que** l'unité constituant une armoire électrique (3) est montée déplaçable en translation par rapport au groupe fonctionnel de machine (1).

5. Groupes fonctionnels de machine d'emballage selon la revendication 3, **caractérisés en ce que** l'unité constituant une armoire électrique (103) est montée à pivotement sur le groupe fonctionnel de machine (107).
